# EUROPEAN PATENT SPECIFICATION

(11) **EP 3 206 299 B1**
(45) Date of publication and mention of the grant of the patent: **20.07.2022**
(21) Application number: 15887636.7
(22) Date of filing: 01.04.2015
(51) Int. Cl.: H02P 29/00, G05B 19/05

(54) **BUILT-IN PLC FUNCTION TYPE DRIVE CONTROL DEVICE**
ANTRIEBSSTEUERUNGSVORRICHTUNG MIT EINGEBAUTER SPS-FUNKTION
DISPOSITIF DE COMMANDE D'ENTRAÎNEMENT DU TYPE À FONCTION PLC INTÉGRÉE

(43) Date of publication of application: 16.08.2017
(73) Proprietor: Fuji Electric Co., Ltd., Kawasaki-shi, Kanagawa 210-9530 (JP)
(72) Inventor: YAHATA, Takashi, Kawasaki-shi Kanagawa 210-9530 (JP); HIGUCHI, Shinichi, Kawasaki-shi Kanagawa 210-9530 (JP)
(74) Representative: Appelt, Christian W.
(86) International application number: PCT/JP2015/060402
(87) International publication number: WO 2016/157489

(56) References cited:
- JP-A- 2004 240 513
- JP-A- 2007 068 292
- US-A- 5 966 897
- US-A1- 2008 205 092

## Description

### Technical Field

The present invention relates to a drive control device that controls a load such as a motor, and in particular, relates to a PLC function incorporating drive control device that incorporates a function of a PLC (Programmable Logic Controller).

### Background Art

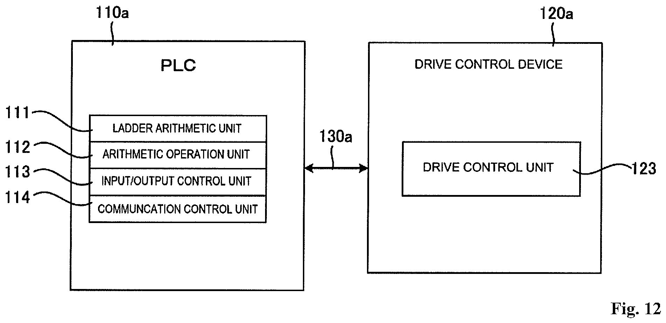

An existing drive control device that carries out efficient control of a load such as a motor by including an inverter or the like is such that sequential control is realized by a PLC being connected as an upstream device. For example, an existing drive control device 120a shown in Fig. 12 is connected via communication means 130a to a separately provided PLC 110a, and receives control parameters used in a drive control unit 123 that carries out control of an unshown load. The control parameters are calculated in a ladder arithmetic unit 111 or arithmetic operation unit 112 of the PLC 110a, which executes sequential control.

Furthermore, in recent years, there has also been development of a device that realizes sequential control by a PLC function being incorporated (hereafter referred to as a "PLC function incorporating drive control device"), by a PLC option device being embedded in a drive control device or by a PLC itself being incorporated in a drive control device, when the necessary sequential control is not complex (for example, refer to PTL 1).

For example, a drive control device described in PTL 2 manages both a PLC unit 110 and a drive control unit 120 with one CPU 140, as shown in Fig. 11, and controls a drive main circuit 122 by a drive control arithmetic unit 115, which has an aspect of a function executed by being read from an application program, being provided in the PLC unit 110, and the drive control arithmetic unit 115 directly reading and writing control parameters. Document US 5 966 897 discloses a packaging machine under control of an electronic control system is set forth. The packaging machine includes a plurality of servo driven packaging stations that execute the processes required to fill and seal a carton. Document US 2008/205092 discloses executable code modules which have been sufficiently tested are installed in an inverter. An application source code is created on a programming device by using function blocks corresponding to the executable code modules and connection lines for connecting the function blocks.

### Citation List

### Patent Literature

PTL 1: JP-A-2006-280090
PTL 2: JP-A-2007-068292

### Summary of Invention

### Technical Problem

Herein, an aspect wherein a drive control device and PLC are connected and utilized is commonly carried out, and it is often the case that a user who uses the devices develops various PLC application programs, and keeps the programs as assets. The drive control device described in PTL 2 is such that a drive control arithmetic unit that directly carries out a transfer of control parameters to and from a drive control unit is provided in a PLC unit, but it may happen that the control parameters of the drive control unit differ in accordance with a control target. Therefore, the necessity of fabricating a drive control arithmetic unit for each drive control unit arises. Also, when an application program previously operating in a separate PLC is embedded in a PLC function incorporating drive control device, revision is necessary in order to carry out a transfer of data from the drive control arithmetic unit, and there is a problem in that the reuse efficiency of past program assets is poor.

The invention, having been contrived considering this kind of problem, has an object of providing a PLC function incorporating drive control device such that a reduction in size and a reduction in cost of an overall system can be achieved by improving an interface between a PLC function and drive control function, and existing PLC application program assets can be commonly utilized for various drive control units with differing control parameters, whereby a reduction in PLC application program development costs can be achieved.

### Solution to Problem

In order to achieve the heretofore described object, a PLC function incorporating drive control device according to the invention is a PLC function incorporating drive control device (1) including a PLC unit (10), which has a ladder arithmetic unit (11) that carries out a ladder arithmetic and an arithmetic operation unit (12) that carries out an arithmetic operation, a drive control unit (20) that controls a load such as a motor using a drive main circuit (24), and a control parameter information storage unit (50) having a control parameter identifier setting region (51), in which is stored an identifier of a control parameter specified as a read target or write target among control parameters of the drive control unit (20), and a control parameter storage region (52) in which a value of a control parameter is temporarily stored correlated to the relevant identifier, wherein the drive control unit (20) includes a control parameter exchange control unit (21) that reads a value of a control parameter corresponding to an identifier specified as a read target in the control parameter identifier setting region (51) from the drive control unit (20) and writes the value into the control parameter storage region (52), and reads an update value of a control parameter corresponding to an identifier specified as a write target in the control parameter identifier setting region (51) from the control parameter storage region (52) and writes the update value into the drive control unit (20).

A PLC unit side control parameter identifier and a drive control unit side control parameter identifier are stored correlated for each control parameter in the control parameter identifier setting region.

The invention is such that rather than data being directly transferred between the PLC unit and drive control unit, a transfer is carried out via a control parameter information storage unit, configured of a RAM or the like, in which data are temporarily stored. At this time, a transfer of a control parameter can also be carried out on the PLC side, using a standard process, by a control parameter exchange control unit that controls a control parameter transfer process being provided on the drive control unit side.

Also, the control parameter identifier setting region of the PLC function incorporating drive control device according to the invention is characterized by further including transfer direction information for each control parameter indicating whether a control parameter is a control parameter transferred from the PLC unit to the drive control unit or a control parameter transferred from the drive control unit to the PLC unit. The invention is defined by the PLC function incorporating drive control device of claim 1. Preferred embodiments of invention are disclosed in dependent claims 2-4.

Preferably, preparation completed flag information indicating that transfer preparation is completed is provided in the control parameter identifier setting region, and it is good when the PLC unit and control parameter exchange control unit set the relevant preparation completed flag information when a write into the control parameter storage region is completed, and reset the preparation completed flag information when a read from the control parameter storage region is completed. By so doing, both the PLC unit and drive control unit can detect a load state on the other side.

The control parameter identifier setting region may be automatically set when starting up by an application program of the PLC unit, or communication means connected to an external device may be provided in the PLC unit, and the control parameter identifier setting region set from the external device.

### Brief Description of Drawings

[Fig. 1] Fig. 1 is a block diagram of a PLC function incorporating drive control device according to a first embodiment of the invention.
[Fig. 2] Fig. 2 is an illustration showing a data configuration of a control parameter attribute value storage region in an attribute value information storage unit of Fig. 1.
[Fig. 3] Fig. 3 is an illustration showing a data configuration of a control parameter storage region 53 of a control parameter information storage unit of Fig. 1.
[Fig. 4] Fig. 4 is an illustration showing a data configuration of a PLC unit setting/reference region of the control parameter information storage unit of Fig. 1.
[Fig. 5] Fig. 5 is a flowchart showing a procedure when controlling a PLC unit control parameter transfer operation from a drive control unit of Fig. 1.
[Fig. 6] Fig. 6 is a block diagram of a PLC function incorporating drive control device according to a second embodiment of the invention.
[Fig. 7] Fig. 7 is a configuration diagram of a control parameter identifier setting region of Fig. 6.
[Fig. 8] Fig. 8 is a flowchart showing a procedure of a process of writing into a control parameter storage region of a control parameter exchange control unit of Fig. 6.
[Fig. 9] Fig. 9 is a flowchart showing a process procedure of a control parameter transfer unit of Fig. 6.
[Fig. 10] Fig. 10 is a flowchart showing a procedure of a process of reading from the control parameter storage region of the control parameter exchange control unit of Fig. 6.

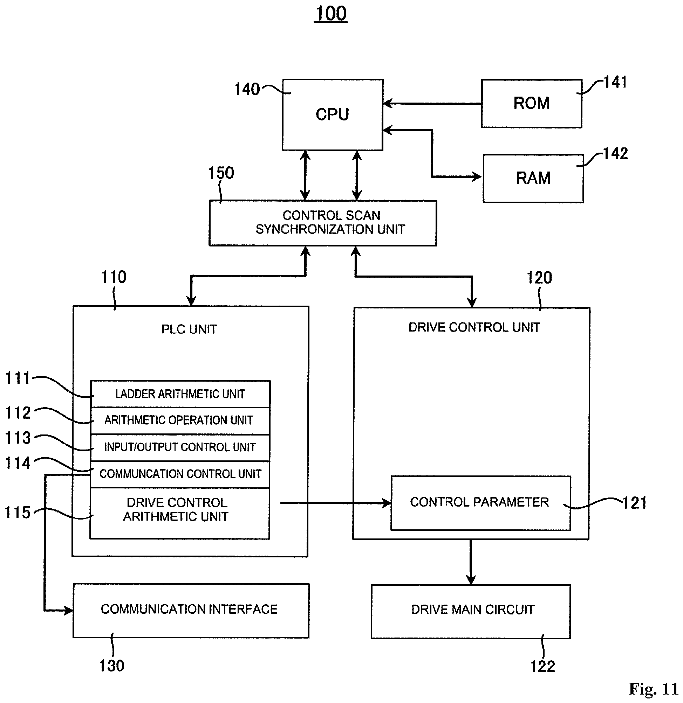

[Fig. 11] Fig. 11 is a block diagram of an existing PLC function incorporating drive control device.
[Fig. 12] Fig. 12 is a block diagram of an existing separately installed drive control device and PLC.

### Description of Embodiments

Hereafter, a description will be given, while referring to the drawings, of embodiments of the invention.

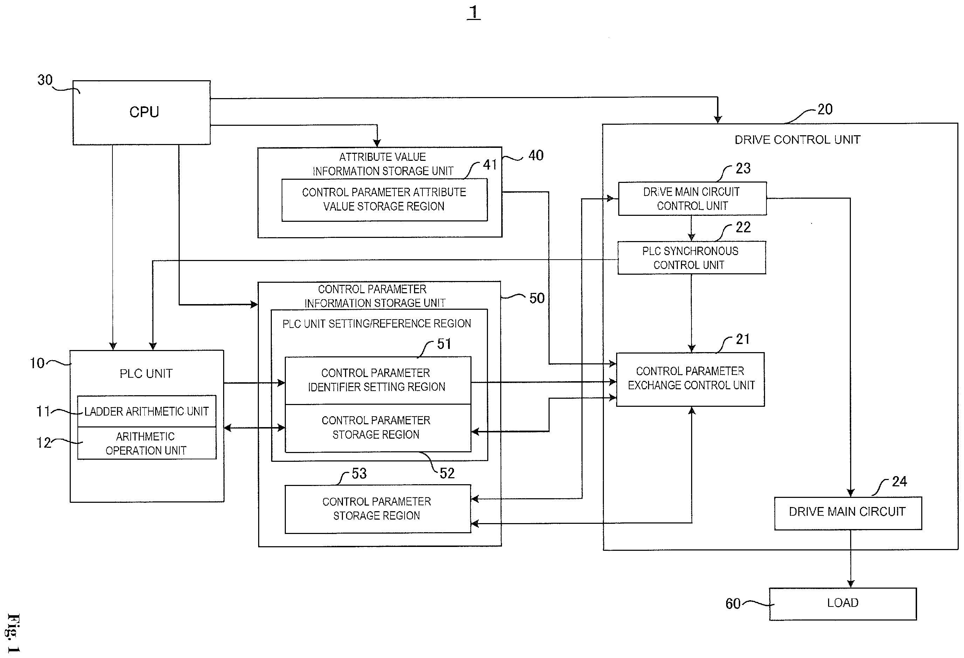

Fig. 1 shows a configuration of a PLC function incorporating drive control device according to a first embodiment of the invention. In the drawing, a PLC function incorporating drive control device 1 has a PLC unit 10 that realizes a PLC function, a drive control unit 20 that controls a load such as a motor, a CPU 30 that executes an arithmetic process, an attribute value information storage unit 40 in which are stored attribute values of control parameters used in the drive control unit 20, a control parameter information storage unit 50 in which are saved updating control parameters, a drive main circuit 24 that outputs an operation signal to a load 60, and a drive main circuit control unit 23 that outputs a control command to the drive main circuit 24.

The PLC unit 10, in the same way as when a PLC is separate, includes a ladder arithmetic unit 11 that carries out ladder arithmetic and an arithmetic operation unit 12 that carries out an arithmetic operation. The ladder arithmetic unit 11 and arithmetic operation unit 12 can be realized by a PLC application program.

The drive control unit 20 includes the drive main circuit 24 that outputs an operation signal to the load 60, the drive main circuit control unit 23 that outputs a control command to the drive main circuit 24, a control parameter exchange control unit 21 that carries out control adjustment by carrying out a read and write of control parameter values into and from the control parameter information storage unit 50, and a PLC synchronous control unit 22 that executes a process of synchronization with the PLC unit 10.

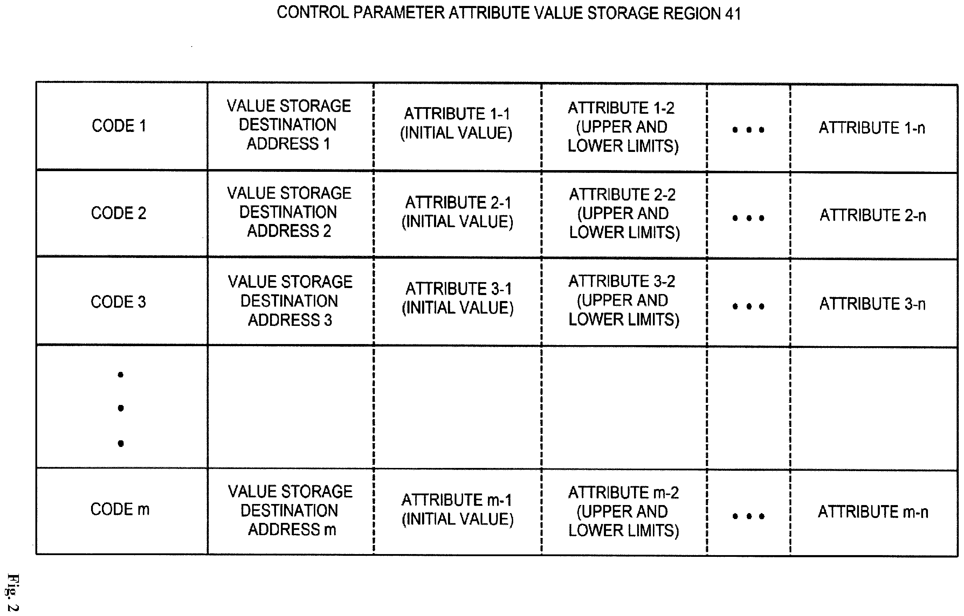

The attribute value information storage unit 40 has a control parameter attribute value storage region 41 in which are stored attribute values, such as initial values and upper and lower limit values, of control parameters used in the drive main circuit control unit 23, and the drive control unit 20 starts an operation by reading the attribute values when starting up. The attribute value information storage unit 40 can be configured of a ROM, which is a non-volatile memory in which data are written in advance. Fig. 2 is a data configuration example of the control parameter attribute value storage region 41 according to this embodiment. For each code, which is an identifier of a control parameter used in the drive control unit 20, a control parameter storage address and attribute values of the control parameter corresponding to the code are saved correlated to each other.

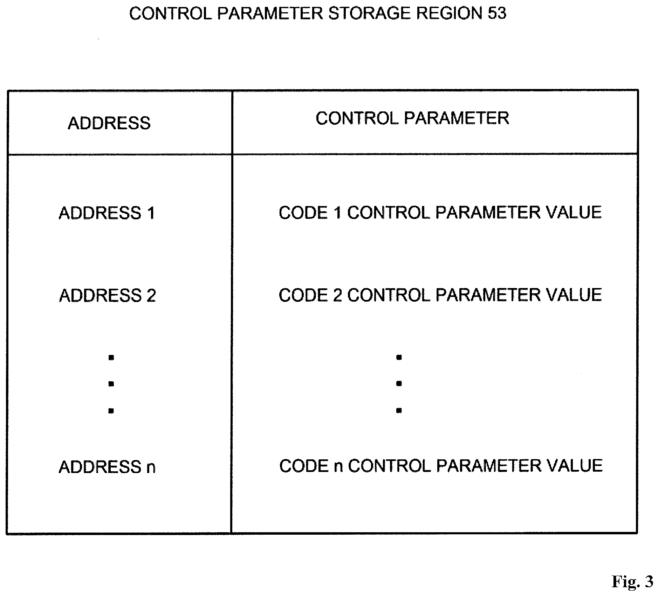

The control parameter information storage unit 50 includes a control parameter identifier setting region 51, configured of a RAM or the like, which is a memory in which data are temporarily stored, for individually declaring a parameter adopted by the PLC unit 10 as a read and write target from among the control parameters, and control parameter storage regions 52 and 53 for temporarily storing an individual control parameter specified by the control parameter identifier setting region 51. Control parameters transferred to and from the PLC unit 10 are stored in the control parameter storage region 52, and control parameters transferred to and from the drive control unit 20 are stored in the control parameter storage region 53, as shown in Fig. 3.

A characteristic of the PLC function incorporating drive control device 1 according to this embodiment is that by control parameters of the PLC unit 10 and drive control unit 20 being carried out via the control parameter information storage unit 50, and a function of carrying out an exchange of control parameters while synchronizing with the PLC unit 10 being provided on the drive control unit 20 side, development and modification of a program for correlating the PLC unit 10 with the drive control unit 20 becomes unnecessary.

Next, the control parameter information storage unit 50 will be described in detail.

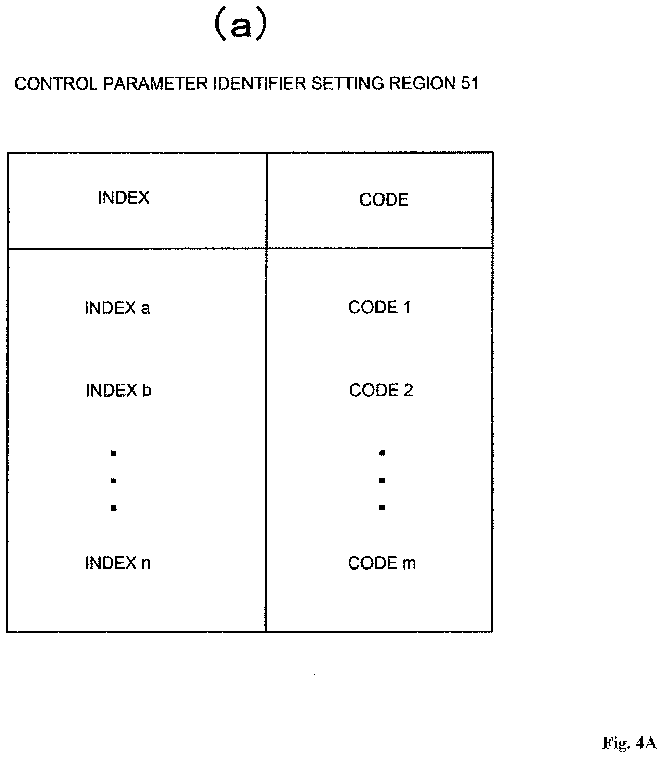

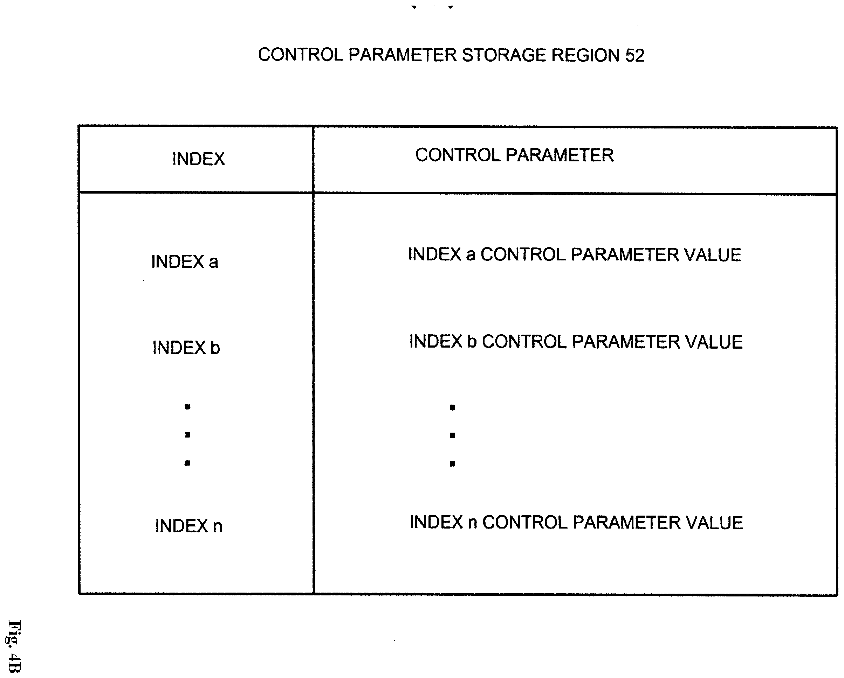

Fig. 4 is a diagram showing configurations of the control parameter identifier setting region 51 and control parameter storage region 52 in the control parameter information storage unit 50. The regions 51 and 52 correspond to an auxiliary relay region when seen from the ladder arithmetic unit 11 of the PLC unit 10.

The control parameter identifier setting region 51 is a region in which is written an identifier indicating a control parameter that is a read and write target of the PLC unit 10 from among the control parameters. The number of control parameters that can be specified by the control parameter identifier setting region 51 may be changeable in accordance with the processing capability of the CPU 30 and the size of the control parameter information storage unit 50. The control parameter identifier setting region 51 can be set when starting up by an initialization process program of the PLC unit 10.

The control parameter storage region 52 is a region in which control parameter values of an identifier set in the control parameter identifier setting region 51 are temporarily stored.

Next, an operation of the PLC unit 10 will be described in detail.

The ladder arithmetic unit 11 and arithmetic operation unit 12 are such that an IEC61131-3 compliant programming language (ladder (LD language), sequential function chart (SFC language), function block diagram (FBD language), structured text (ST language), and instruction list (IL language)) can be used. A user compiles an application program using an unshown software development tool, and executes the program using the ladder arithmetic unit 11 and arithmetic operation unit 12.

In an application program that operates in the PLC unit 10, a control parameter among the control parameters that is a read and write target is specified by a name, address, code, or the like at a time of an initialization process or a first operation. Then, in a normal sequential operation, the control parameter that is the read target specified by the previous process is read from the control parameter storage region 52, arithmetic is carried out, and an update value for the control parameter is written into the control parameter storage region 52 as the result of the arithmetic.

Fig. 4 (a) is a data configuration example of the control parameter identifier setting region 51 according to this embodiment. An index, which is an identifier for accessing from the ladder arithmetic unit 11 or arithmetic operation unit 12 of the PLC unit 10, and a code, which is an identifier for accessing from the control parameter exchange control unit 21 of the drive control unit 20, are saved correlated. That is, the configuration is such that a control parameter is identified by an index in the ladder arithmetic unit 11 and arithmetic operation unit 12, and a control parameter of the drive control unit 20 is identified by a code.

Correlation of an identifier of the control parameter identifier setting region 51 and a control parameter of the control parameter storage region 52 may be carried out with the index as a key, as shown in Fig. 4, or can be carried out using common technology, such as correlating a memory address in advance.

Next, an operation of the drive control unit 20 will be described in detail.

The control parameter exchange control unit 21 reads the attribute value of each operating parameter from the attribute value information storage unit 40 when an operation is started, and carries out a transfer of control parameters to and from the PLC unit 10 by cyclically reading and writing control parameter values from and into the control parameter information storage unit 50. After an initialization process of the PLC unit 10 is completed, the control parameter exchange control unit 21, firstly, confirms the setting details of the control parameter identifier setting region 51, and acquires the identifier of each control parameter an application program operating in the PLC unit 10 wishes to read or write. Next, the control parameter exchange control unit 21 reads a control parameter that is a read target from among the control parameters, and writes the control parameter into the control parameter storage region 52. Then, after the application program is caused to operate for one cycle by the PLC synchronous control unit 22, to be described hereafter, the control parameter exchange control unit 21 reads the update value of a write target control parameter from the control parameter storage region 52, and sets the update value for the control parameter. By this operation being repeated, an exchange of control parameter data with the application program operating in the PLC unit 10 can be carried out via the control parameter information storage unit 50.

The drive main circuit control unit 23 reads the operating parameter attribute values when an operation is started, and executes control of the drive main circuit 24 while reading/writing control parameter values from/into the control parameter storage region 53 in every control cycle.

The drive control unit 20 can be controlled from the application program operating in the PLC unit 10 simply by reading from or writing into an auxiliary relay region typically supported in a normal PLC application. With no need for a special library or procedure, operation can be carried out simply by the correlation between a PLC unit 10 side control parameter identifier and a drive control unit 20 side identifier being set in the control parameter identifier setting region 51 by an initialization process program, meaning that the user can reduce development costs owing to an effective utilization of existing application program assets and ease of development.

Next, the PLC synchronous control unit 22 of the drive control unit 20 will be described.

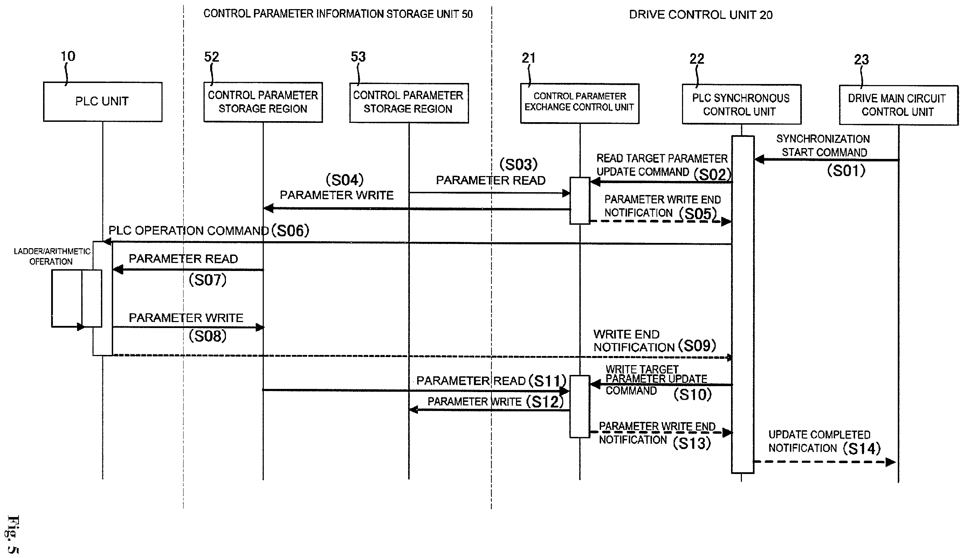

Fig. 5 is a flowchart showing a procedure when controlling a PLC unit 10 control parameter transfer operation from the drive control unit 20. The PLC unit 10 executes one cycle of an operation every time a command is received from the PLC synchronous control unit 22. For example, an interrupt signal from the PLC synchronous control unit 22 to the CPU 30 can be used as the command.

Also, at this time, the PLC synchronous control unit 22 sends a command to the control parameter exchange control unit 21, thereby executing a control parameter exchange process. By the application program operating in the PLC unit 10 and an operation of the control parameter exchange control unit 21 being executed by the same interruption from the PLC synchronous control unit 22, the processes can be synchronized. Of course, the PLC unit 10 and drive control unit 20 can also be caused to operate asynchronously by using independent interruption signals.

Hereafter, based on Fig. 5, a process procedure of the PLC synchronous control unit 22 and control parameter exchange control unit 21 will be described.

Firstly, the drive main circuit control unit 23 outputs a synchronous start command to the PLC synchronous control unit 22 in every control cycle (S01). The PLC synchronous control unit 22 starts an operation on receiving the synchronous start command, and outputs a command to update a read target control parameter to the control parameter exchange control unit 21 (S02) . Thereupon, based on the command, the control parameter exchange control unit 21 extracts the value of a write target control parameter from the control parameter storage region 53 (S03), and writes the value into the relevant region of the control parameter storage region 52 (S04). Subsequently, the control parameter exchange control unit 21 sends notification that the write process is ended to the PLC synchronous control unit 22 (S05).

Next, the PLC synchronous control unit 22 outputs an operation command to the PLC unit 10 (S06) . On receiving the operation command, the PLC unit 10 reads the value of a read target control parameter from the control parameter storage region 52 (S07), carries out a ladder arithmetic and arithmetic operation for one cycle, and writes a control parameter update value, which is a result of the arithmetic, into the relevant region of the control parameter storage region 52 (S08). Subsequently, the PLC unit 10 sends notification that the write process is ended to the PLC synchronous control unit 22 (S09) . On receiving the notification, the PLC synchronous control unit 22 sends the update value of a write target control parameter to the control parameter exchange control unit 21 (S10). On receiving the update value, the control parameter exchange control unit 21 reads an update target control parameter from the control parameter storage region 52 (S11), and writes the control parameter into the control parameter storage region 53 (S12), thereby updating the control parameter value. Subsequently, the control parameter exchange control unit 21 notifies the PLC synchronous control unit 22 that the write is ended (S13). On receiving the notification, the PLC synchronous control unit 22 sends notification that the update is completed to the drive main circuit control unit 23 (S14) .

The updated control parameter is used in controlling the drive main circuit 24, whereby operation adjustment can be carried out. Of the heretofore described process, step S06 and step S09 may be realized by an interruption signal to the CPU 30.

According to this embodiment, as heretofore described, control parameters are exchanged while synchronizing the PLC unit 10 and drive control unit 20 using the control parameter exchange control unit 21 and PLC synchronous control unit 22 provided in the drive control unit 20, because of which development and modification of a program for correlating the PLC unit 10 with the drive control unit 20 becomes unnecessary. Also, as a synchronization process is started in accordance with a command from the drive main circuit control unit 23, the drive main circuit control unit 23 receives a control parameter updated in accordance with a control cycle of the drive main circuit 24, and can carry out a control process using the control parameter.

Next, a second embodiment of the invention will be described.

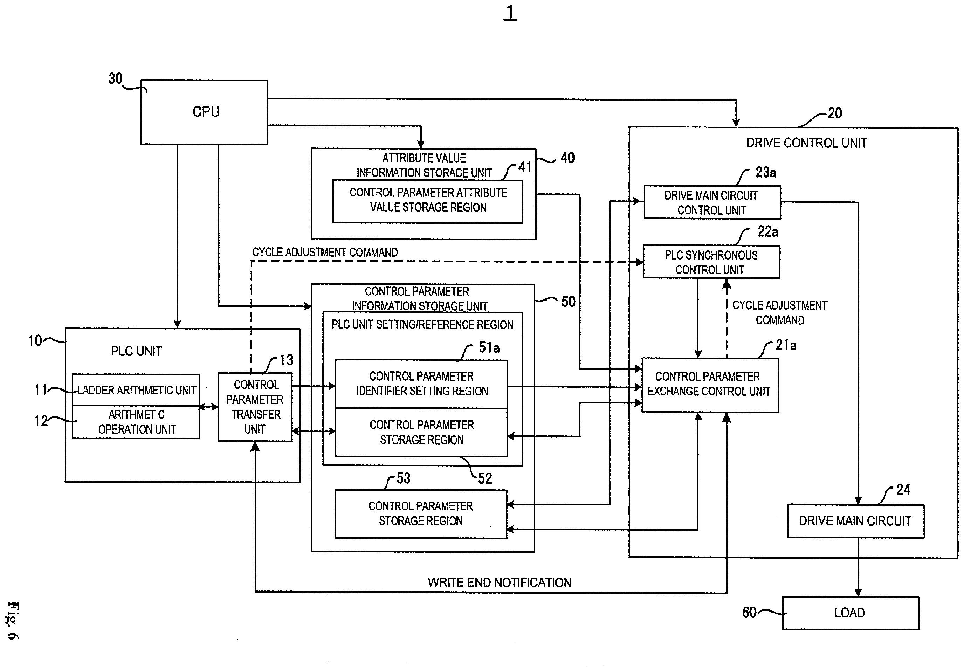

Fig. 6 is a function block diagram of the PLC function incorporating drive control device 1 according to this embodiment. A main difference from the first embodiment is that in addition to an index, which is an identifier of a PLC unit 10 side control parameter, and a code, which is an identifier of a drive control unit 20 side control parameter, being correlated in a control parameter identifier setting region 51a, direction information indicating whether a control parameter is a control parameter transferred from the PLC unit 10 to the drive control unit 20 or a control parameter transferred from the drive control unit 20 to the PLC unit 10, and ready information indicating that transfer preparation is completed, are added. Together with this, a control parameter transfer portion 13, which executes a process of transferring a control parameter between the ladder arithmetic unit 11 and arithmetic operation unit 12 and the control parameter information storage unit 50, is added to the PLC unit 10. Also, in the first embodiment, the drive main circuit control unit 23 carries out a triggering of a synchronization process, but in this embodiment, a PLC synchronous control unit 22a generates a timing of a synchronization process. A timing signal output by the PLC synchronous control unit 22a being adjustable is one characteristic of this embodiment. Other configurations are the same as in the first embodiment, because of which the same reference signs are allotted to identical components, and a description is omitted.

### (Configuration of Control Parameter Identifier Setting Region 51a)

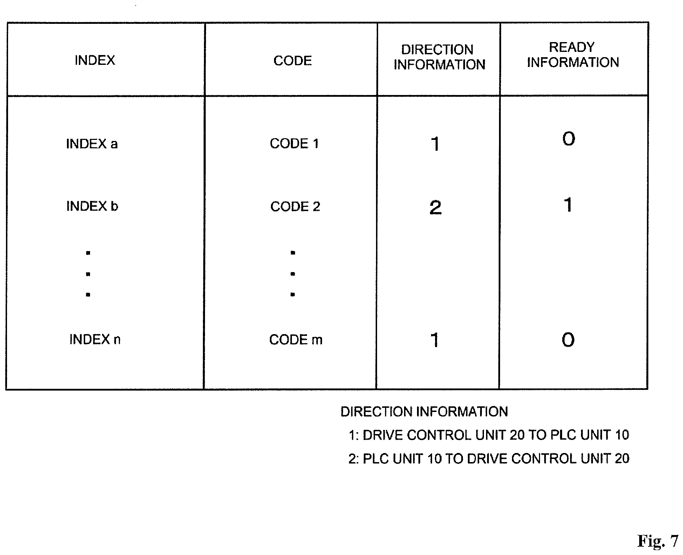

A data configuration example of the control parameter identifier setting region 51a according to this embodiment is shown in Fig. 7. An index, code, direction information, and ready information are saved linked for every transfer target control parameter. Herein, the index and code represent an identifier of a PLC unit 10 side control parameter and an identifier of a drive control unit 20 side control parameter respectively, in the same way as in the first embodiment. Also, the direction information is set as "1" in the case of a control parameter transferred from the drive control unit 20 to the PLC unit 10, and set as "2" in the case of a control parameter transferred from the PLC unit 10 to the drive control unit 20. The ready information is such that the side writing the control parameter value in the control parameter storage region 52 sets "1" when transfer preparation is completed, and the side reading the control parameter value from the control parameter storage region 52 sets "0" after reading the control parameter value.

The index, code, and direction information in the control parameter identifier setting region 51a may be automatically set when starting up by an initialization process program of the PLC unit 10, or may be set by downloading in advance from an external maintenance tool via unshown communication means. Also, the ready information is set at "0" as an initial value.

### (Control Parameter Exchange Process)

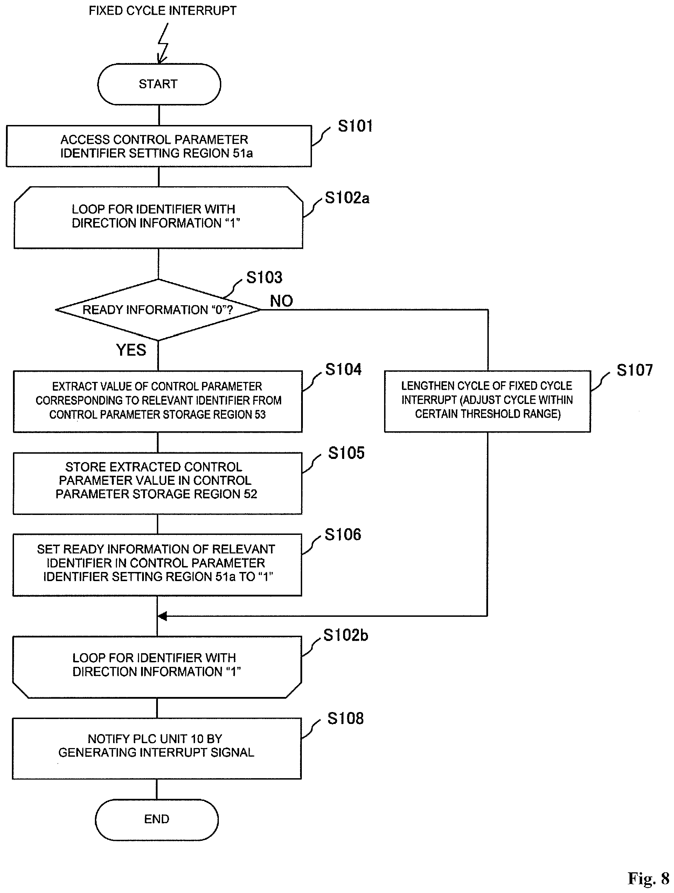

Next, using Fig. 8 to Fig. 10, a control parameter exchange process will be described. The PLC synchronous control unit 22a of the drive control unit 20 outputs a timing signal in a constant cycle. The timing signal is, for example, an interrupt signal to the CPU 30, wherein the CPU 30 detects an emitting of the interrupt signal, and starts up a control parameter exchange control unit 21a.

Also, the PLC synchronous control unit 22a has an upper limit value and a lower limit value of the timing signal cycle, and has a function of being able to change the cycle within the range of the upper limit value and lower limit value. This can be realized by, for example, utilizing a reference clock that causes the CPU 30 to operate, and adjusting a frequency division ratio of the reference clock. As an initial value of the timing signal cycle, for example, the value may be the lower limit value when starting, or may be an arbitrary value such as a middle value when starting.

In Fig. 8, the control parameter exchange control unit 21a, on starting up in response to a timing signal from the PLC synchronous control unit 22a, accesses the control parameter identifier setting region 51a (S101), and repeats the following process for an identifier of which the direction information is "1", that is, an identifier of a control parameter transferred from the drive control unit 20 to the PLC unit 10 (S102a, S102b).

The control parameter exchange control unit 21a, firstly, determines whether or not the ready information of the relevant identifier is "0" (S103), and extracts the value of the control parameter corresponding to the code of the identifier from the control parameter storage region 53 when the ready information is "0" (S104). Then, the control parameter exchange control unit 21a writes the extracted value into a region of the control parameter storage region 52 corresponding to the code (S105), and sets "1" as the ready information corresponding to the relevant code of the control parameter identifier setting region 51a (S106).

Meanwhile, when the ready information of the accessed identifier is not "0" in step S103 ("NO" in S103), the output cycle of the timing signal of the PLC synchronous control unit 22a is lengthened by a certain time (S107).

After carrying out the heretofore described process for all identifiers with the direction information "1" (S102a to S102b), the control parameter exchange control unit 21a notifies the control parameter transfer unit 13 of the PLC unit 10, using an interrupt signal or the like, that the writing of control parameters into the control parameter storage region 52 is ended (S108).

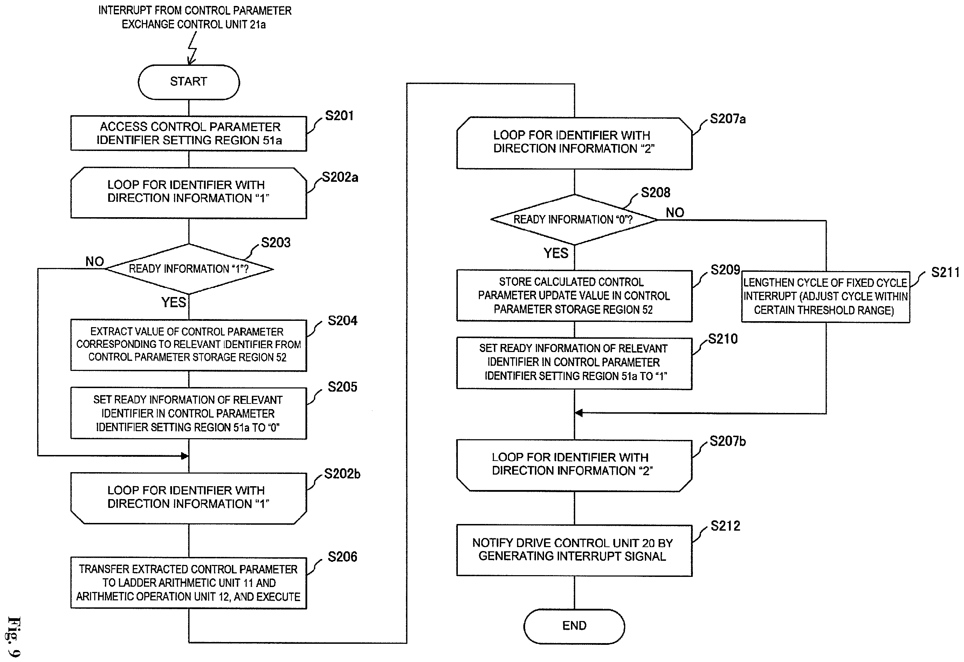

In Fig. 9, the control parameter transfer unit 13 of the PLC unit 10, on receiving the notification from the control parameter exchange control unit 21a, accesses the control parameter identifier setting region 51a (S201), and repeats the following process for an identifier of which the direction information is "1" (S202a, S202b).

The control parameter transfer unit 13, firstly, determines whether or not the ready information of the relevant identifier is "1" (S203), and extracts the value of the control parameter corresponding to the code of the identifier from the control parameter storage region 52 when the ready information is "1" (S204). Then, the control parameter transfer unit 13 correlates the extracted value and the index corresponding to the code and saves them in an unshown temporary buffer, and sets "0" as the ready information corresponding to the relevant code of the control parameter identifier setting region 51a (S205).

After carrying out the heretofore described process for all identifiers with the direction information "1" (S202a to S202b), the control parameter transfer unit 13 transfers the index and control parameter value saved in the temporary buffer to the ladder arithmetic unit 11 and arithmetic operation unit 12, and causes each to execute a process (S206).

Then, after the processes in the ladder arithmetic unit 11 and arithmetic operation unit 12 are executed, the control parameter transfer unit 13 repeats the following process for an identifier of the control parameter identifier setting region 51a of which the direction information is "2" (S207a, S207b) .

The control parameter transfer unit 13, firstly, determines whether or not the ready information of the relevant identifier is "0" (S208), and stores a control parameter update value, which is a result of the arithmetic of the ladder arithmetic unit 11 and arithmetic operation unit 12, in the control parameter storage region 52 when the ready information is "0" (S209). At this time, the control parameter transfer unit 13 extracts the code corresponding to the index in the control parameter identifier setting region 51a, and writes the update value into a region of the control parameter storage region 52 corresponding to the code.

Subsequently, the control parameter transfer unit 13 sets "1" as the ready information of the relevant identifier of the control parameter identifier setting region 51a (S210) . Meanwhile, when the ready information is not "0" in step S208 ("NO" in S208), the output cycle of the timing signal of the PLC synchronous control unit 22a is lengthened by a certain time (S211).

With regard to the timing signal of the PLC synchronous control unit 22a, when "YES", that is, the ready information "0", continues for a certain number of continuous cycles in step S103 and step S208, the output cycle of the timing signal may be shortened by a certain time.

After carrying out the heretofore described process for all identifiers with the direction information "2" (S207a to S207b), the control parameter transfer unit 13 notifies the control parameter exchange control unit 21a, using an interrupt signal or the like, that the writing of control parameters into the control parameter storage region 52 is ended (S212).

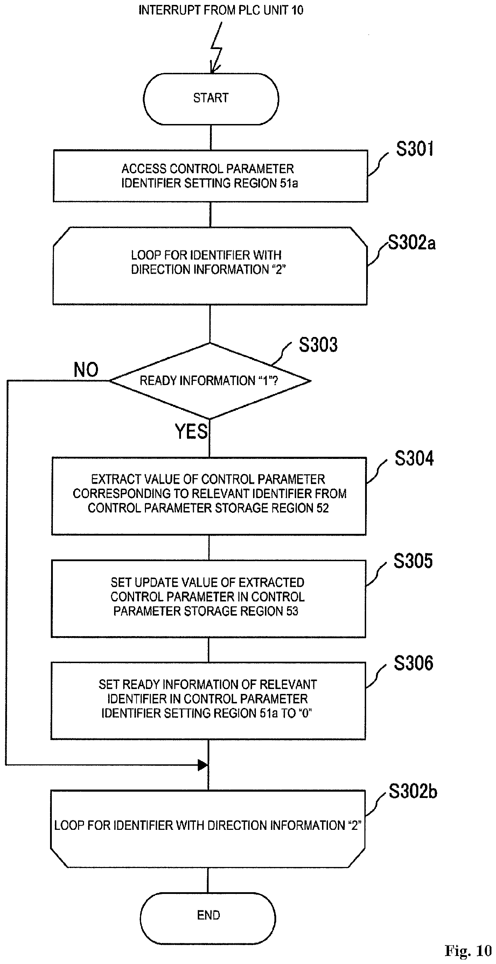

In Fig. 10, the control parameter exchange control unit 21a, on receiving the notification, accesses the control parameter identifier setting region 51a (S301), and repeats the following process for an identifier of which the direction information is "2" (S302a, S302b).

The control parameter exchange control unit 21a, firstly, determines whether or not the ready information of the relevant identifier is "1" (S303), and extracts the update value of the control parameter corresponding to the code of the identifier from the control parameter storage region 52 when the ready information is "1" (S304). Then, the control parameter exchange control unit 21a sets the extracted update value into a region of the control parameter storage region 53 corresponding to the identifier of the code (S305), and sets "0" as the ready information corresponding to the relevant code of the control parameter identifier setting region 51a (S306) .

Control parameters of the drive control unit 20 are updated by a function of the PLC unit 10 by the heretofore described series of processes.

The control parameter storage region 53 is accessed from both the control parameter exchange control unit 21a and a drive main circuit control unit 23a, but in this embodiment, the access process is exclusively controlled. The drive main circuit control unit 23a reads a control parameter updated by the heretofore described process from the control parameter storage region 53, and executes a process controlling the drive main circuit 24.

According to this embodiment, the drive main circuit control unit 23a can operate independently of the PLC synchronous control unit 22a, because of which the sequential process of the PLC unit 10 can be executed without affecting the operation of the drive main circuit control unit 23a. Also, in this embodiment, the operating parameter update timing signal of the PLC synchronous control unit 22a is adjusted using ready information, because of which the operating parameters can be updated in an appropriate cycle in accordance with the device usage conditions and load.

In the above description, the functions of the PLC unit 10 and drive control unit 20 are executed by the CPU 30, but in this embodiment, the PLC unit 10 and drive control unit 20 can be configured independently, because of which the PLC unit 10 and drive control unit 20 can also be realized by a multiprocessor configuration wherein each operates with a separate CPU.

### Reference Signs List

- 1: PLC function incorporating drive control device
- 10: PLC unit
- 11: Ladder arithmetic unit
- 12: Arithmetic operation unit
- 13: Control parameter transfer unit
- 20: Drive control unit
- 21, 21a: Control parameter exchange control unit
- 22, 22a: PLC synchronous control unit
- 23: Drive main circuit control unit
- 24: Drive main circuit
- 40: Attribute value information storage unit
- 50: Control parameter information storage unit
- 51, 51a: Control parameter identifier setting region
- 52, 53: Control parameter storage region

## Claims

1. A PLC function incorporating drive control device (1), comprising:
a PLC unit (10) having a ladder arithmetic unit (11) that carries out a ladder arithmetic and an arithmetic operation unit (12) that carries out an arithmetic operation;
a drive control unit (20) that controls a load using a drive main circuit (24); and
a control parameter information storage unit (50) having a control parameter identifier setting region, in which is stored an identifier of a read target or write target control parameter among control parameters of the drive control unit (20), and a control parameter storage region in which a value of a control parameter is temporarily stored correlated to the relevant identifier, wherein
the drive control unit (20) includes a control parameter exchange control unit (21, 21a) that reads a value of a control parameter corresponding to an identifier specified as a read target in the control parameter identifier setting region from the drive control unit (20) and writes the value into the control parameter storage region, and reads an update value of a control parameter corresponding to an identifier specified as a write target in the control parameter identifier setting region from the control parameter storage region and writes the update value into the drive control unit (20),
wherein a PLC unit side control parameter identifier and a drive control unit side control parameter identifier are stored correlated for each control parameter in the control parameter identifier setting regior; and
the PLC function incorporating drive control device (1) is further **characterized in that** the control parameter identifier setting region includes transfer direction information for each control parameter indicating whether a control parameter is a control parameter transferred from the PLC unit (10) to the drive control unit (20) or a control parameter transferred from the drive control unit (20) to the PLC unit (10).

2. The PLC function incorporating drive control device (1) according to claim 1, wherein
the control parameter identifier setting region further includes preparation completed flag information indicating that transfer preparation is completed, and the PLC unit (10) and control parameter exchange control unit (21, 21a) set the relevant preparation completed flag information when a write into the control parameter storage region is completed, and reset the preparation completed flag information when a read from the control parameter storage region is completed.

3. The PLC function incorporating drive control device (1) according to any one of claims 1 to 2, wherein
the drive control unit (20) includes a PLC synchronous control unit that outputs a timing signal for synchronizing an operation of the PLC unit (10) with an operation of the drive control unit (20).

4. The PLC function incorporating drive control device (1) according to any one of claims 1 to 2, wherein
the PLC synchronous control unit outputs a timing signal for the PLC unit (10) to read a control parameter from the control parameter storage region, and the PLC unit (10) outputs a timing signal for the control parameter exchange control unit (21, 21a) to read a control parameter from the control parameter storage region.

## Patentansprüche

1. Antriebssteuervorrichtung mit integrierter PLC (Programmable Logic Controller)-Funktion (1), umfassend:
eine PLC-Einheit (10) mit einer Kontaktplanarithmetikeinheit (11), die eine Kontaktplanarithmetik ausführt, und eine Arithmetikoperationseinheit (12), die eine Arithmetikoperation ausführt;
eine Antriebssteuereinheit (20), die eine Last unter Verwendung eines Antriebshauptkreises (24) steuert; und
eine Steuerparameterinformationsspeichereinheit (50) mit einer Steuerparameterkennungseinstellregion, in der eine Kennung eines Leseziel- oder Schreibzielsteuerparameters unter Steuerparametern der Antriebssteuereinheit (20) gespeichert ist, und einer Steuerparameterspeicherregion, in der ein Wert eines Steuerparameters in Korrelation mit der relevanten Kennung vorübergehend gespeichert ist, wobei die Antriebssteuereinheit (20) eine Steuerparameteraustauschsteuereinheit (21, 21a) umfasst, die einen Wert eines Steuerparameters, der einer Kennung entspricht, die als ein Leseziel in der Steuerparameterkennungseinstellregion spezifiziert ist, aus der Antriebssteuereinheit (20) liest und den Wert in die Steuerparameterspeicherregion schreibt, und einen Aktualisierungswert eines Steuerparameters, der einer Kennung entspricht, die als ein Schreibziel in der Steuerparameterkennungseinstellregion spezifiziert ist, aus der Steuerparameterspeicherregion liest und den Aktualisierungswert in die Antriebssteuereinheit (20) schreibt, wobei
eine Steuerparameterkennung auf der PLC-Einheitsseite und eine Steuerparameterkennung auf der Antriebssteuereinheitsseite für jeden Steuerparameter in der Steuerparameterkennungseinstellregion in Korrelation gespeichert sind; und
die Antriebssteuervorrichtung mit integrierter PLC-Funktion (1) ferner **dadurch gekennzeichnet ist, dass** die Steuerparameterkennungseinstellregion
Übertragungsrichtungsinformationen für jeden Steuerparameter umfasst, die angeben, ob ein Steuerparameter ein von der PLC-Einheit (10) an die Antriebssteuereinheit (20) übertragener Steuerparameter oder ein von der Antriebssteuereinheit (20) an die PLC-Einheit (10) übertragener Steuerparameter ist.

2. Antriebssteuervorrichtung mit integrierter PLC-Funktion (1) nach Anspruch 1, wobei
die Steuerparameterkennungseinstellregion ferner eine Vorbereitung-abgeschlossen-Flag-Information umfasst, die angibt, dass die Übertragungsvorbereitung abgeschlossen ist, und die PLC-Einheit (10) und die Steuerparameteraustauschsteuereinheit (21, 21a) die relevante Vorbereitung-abgeschlossen-Flag-Information setzt, wenn ein Schreiben in die Steuerparameterspeicherregion abgeschlossen ist, und die Vorbereitung-abgeschlossen-Flag-Information zurücksetzt, wenn ein Lesen aus der Steuerparameterspeicherregion abgeschlossen ist.

3. Antriebssteuervorrichtung mit integrierter PLC-Funktion (1) nach einem der Ansprüche 1 bis 2, wobei
die Antriebssteuereinheit (20) eine PLC-Synchronsteuereinheit umfasst, die ein Zeitsteuerungssignal zum Synchronisieren einer Operation der PLC-Einheit (10) mit einer Operation der Antriebssteuereinheit (20) ausgibt.

4. Antriebssteuervorrichtung mit integrierter PLC-Funktion (1) nach einem der Ansprüche 1 bis 2, wobei
die PLC-Synchronsteuereinheit ein Zeitsteuerungssignal für die PLC-Einheit (10) ausgibt, um einen Steuerparameter aus der Steuerparameterspeicherregion zu lesen, und die PLC-Einheit (10) ein Zeitsteuerungssignal für die Steuerparameteraustauschsteuereinheit (21, 21a) ausgibt, um einen Steuerparameter aus der Steuerparameterspeicherregion zu lesen.

## Revendications

1. Dispositif de commande d'entraînement incorporant une fonction d'automate programmable, PLC, (1), comprenant :
une unité PLC (10) présentant une unité arithmétique à échelle (11) qui met en œuvre une arithmétique à échelle et une unité d'opération arithmétique (12) qui met en œuvre une opération arithmétique ;
une unité de commande d'entraînement (20) qui commande une charge en utilisant un circuit principal d'entraînement (24) ; et
une unité de stockage d'informations de paramètres de commande (50) présentant une région de réglage d'identifiant de paramètre de commande, dans laquelle est stocké un identifiant d'un paramètre de commande de cible de lecture ou de cible d'écriture, parmi des paramètres de commande de l'unité de commande d'entraînement (20), et une région de stockage de paramètre de commande dans laquelle une valeur d'un paramètre de commande est temporairement stockée en corrélation avec l'identifiant pertinent, dans laquelle l'unité de commande d'entraînement (20) inclut une unité de commande d'échange de paramètre de commande (21, 21a) qui lit une valeur d'un paramètre de commande correspondant à un identifiant spécifié comme étant une cible de lecture dans la région de réglage d'identifiant de paramètre de commande, à partir de l'unité de commande d'entraînement (20), et écrit la valeur dans la région de stockage de paramètre de commande, et lit une valeur de mise à jour d'un paramètre de commande correspondant à un identifiant spécifié comme étant une cible d'écriture dans la région de réglage d'identifiant de paramètre de commande, à partir de la région de stockage de paramètre de commande, et écrit la valeur de mise à jour dans l'unité de commande d'entraînement (20) ; dans lequel un identifiant de paramètre de commande côté unité PLC et un identifiant de paramètre de commande côté unité de commande d'entraînement sont stockés en corrélation pour chaque paramètre de commande dans la région de réglage d'identifiant de paramètre de commande ; et
dans lequel le dispositif de commande d'entraînement incorporant une fonction PLC (1) est en outre **caractérisé en ce que** la région de réglage d'identifiant de paramètre de commande inclut des informations de direction de transfert, pour chaque paramètre de commande, indiquant si un paramètre de commande est un paramètre de commande transféré de l'unité PLC (10) à l'unité de commande d'entraînement (20), ou un paramètre de commande transféré de l'unité de commande d'entraînement (20) à l'unité PLC (10).

2. Dispositif de commande d'entraînement incorporant une fonction PLC (1) selon la revendication 1, dans lequel :
la région de réglage d'identifiant de paramètre de commande inclut en outre des informations d'indicateur de préparation terminée indiquant qu'une préparation de transfert est terminée, et dans lequel l'unité PLC (10) et l'unité de commande d'échange de paramètre de commande (21, 21a) règlent les informations d'indicateur de préparation terminée pertinentes lorsqu'une écriture dans la région de stockage de paramètre de commande est terminée, et réinitialisent les informations d'indicateur de préparation terminée lorsqu'une lecture à partir de la région de stockage de paramètre de commande est terminée.

3. Dispositif de commande d'entraînement incorporant une fonction PLC (1) selon l'une quelconque des revendications 1 à 2, dans lequel :
l'unité de commande d'entraînement (20) inclut une unité de commande synchrone d'automate PLC qui fournit en sortie un signal de temporisation pour synchroniser un fonctionnement de l'unité PLC (10) avec un fonctionnement de l'unité de commande d'entraînement (20).

4. Dispositif de commande d'entraînement incorporant une fonction PLC (1) selon l'une quelconque des revendications 1 à 2, dans lequel :
l'unité de commande synchrone d'automate PLC fournit en sortie un signal de temporisation pour permettre à l'unité PLC (10) de lire un paramètre de commande dans la région de stockage de paramètre de commande, et l'unité PLC (10) fournit en sortie un signal de temporisation pour permettre à l'unité de commande d'échange de paramètre de commande (21, 21a) de lire un paramètre de commande dans la région de stockage de paramètre de commande.
